(19) Europäisches Patentamt
European Patent Office
Office européen des brevets

(11) **EP 1 153 267 B1**

(12) **FASCICULE DE BREVET EUROPEEN**

(45) Date de publication et mention
de la délivrance du brevet:
**28.02.2007 Bulletin 2007/09**

(21) Numéro de dépôt: **00964371.9**

(22) Date de dépôt: **26.09.2000**

(51) Int Cl.:
**G01C 19/56** (2006.01)

(86) Numéro de dépôt international:
**PCT/FR2000/002655**

(87) Numéro de publication internationale:
**WO 2001/023838 (05.04.2001 Gazette 2001/14)**

(54) **GYROMETRE DE TYPE DIAPASON**

STIMMGABELUMDREHUNGSMESSER

TUNING FORK GYROSCOPE

(84) Etats contractants désignés:
**DE FR GB IT**

(30) Priorité: **28.09.1999 FR 9912070**

(43) Date de publication de la demande:
**14.11.2001 Bulletin 2001/46**

(73) Titulaire: **THALES AVIONICS S.A.**
**78140 Vélizy Villacoublay (FR)**

(72) Inventeurs:
• **WEHBE AIAUSE, Hélène,**
**Thomson-CSF Proprieté Intel.**
**F-94117 Arcueil Cedex (FR)**

• **FORMOSA, Fabien,**
**Thomson-CSF Propriété Intel.**
**F-94117 Arcueil Cedex (FR)**

(74) Mandataire: **Guérin, Michel et al**
**Marks & Clerk France**
**31-33 Avenue Aristide Briand**
**94117 Arcueil Cédex (FR)**

(56) Documents cités:
**EP-A- 0 664 438** **EP-A- 0 915 323**
**DE-A- 4 430 439** **DE-A- 19 500 800**
**US-A- 5 780 739**

## Description

L'invention concerne les micro-mécanismes usinés comportant des éléments de rappel sous forme de poutres soumis à des déformations simultanées en flexion et en torsion. Plus précisément l'invention concerne les gyromètres de type diapason utilisant une structure micro-mécanique de poutres vibrantes.

Dans certains micro-mécanismes usinés, il est parfois nécessaire d'avoir simultanément des modes de résonance en translation et d'autres modes en rotation. Parmi ces micro-mécanismes on trouve l'élément sensible d'un gyromètre à diapason.

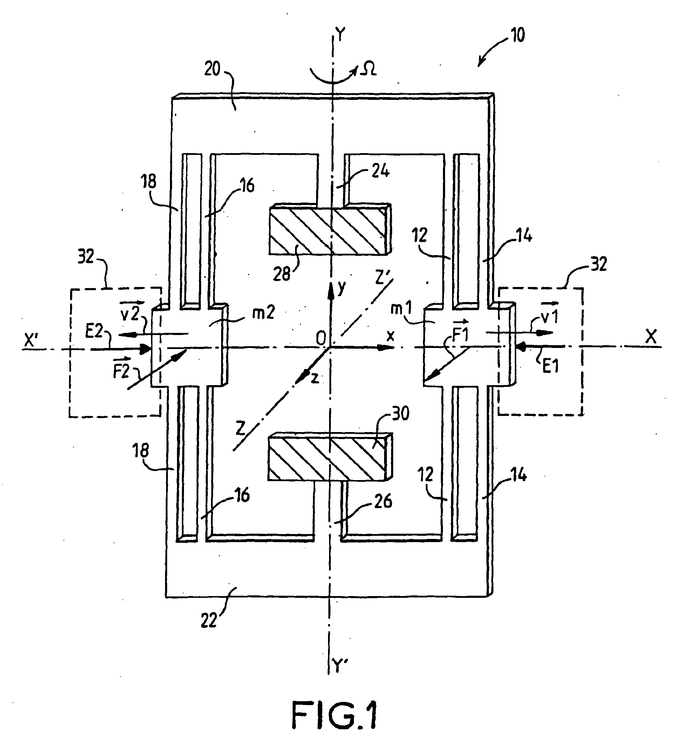

La figure 1 montre un dessin simplifié d'un l'élément sensible 10 micro-usiné d'un gyromètre de type diapason ayant une structure symétrique en double poutre. L'élément sensible présente deux degrés de libertés selon deux axes Ox et Oz perpendiculaires d'un trièdre de référence Oxyz. La finalité du gyromètre est la mesure de la vitesse angulaire Ω de la référence Oxz tournant autour de l'axe Oy perpendiculaire à cette référence.

L'élément sensible du gyromètre comporte une première paire de deux poutres d'excitation 12 et 14 et une seconde paire de deux autres poutres d'excitation 16 et 18. Les poutres d'excitation de la première et de la seconde paire sont situées dans un même plan Oxy du trièdre de référence et parallèles à un axe sensible YY' confondu avec l'axe Oy. Ces première et seconde paires sont situées de part et d'autre et sensiblement à égale distance de l'axe YY'.

Chaque paire de poutres d'excitation comporte une masse centrale reliant en leur milieu les deux poutres de la paire, une masse m1 au milieu de la première paire et une masse m2 au milieu de la seconde paire.

Les extrémités des poutres 12, 14, 16, 18 situées d'un même côté sont reliées respectivement à un premier 20 et à un second élément transversal 22 situés dans le même plan Oxy des poutres d'excitation et sensiblement perpendiculaires à ces poutres.

Les premier 20 et second 22 éléments transversaux comportent respectivement une première 24 et une seconde poutre de rappel 26 (ou élément de rappel) dont les axes de torsion sont colinéaires à l'axe sensible YY' du gyromètre. Les extrémités des première et seconde poutres de rappel sont reliées respectivement à un premier 28 et à un second bâti 30 solidaires du gyromètre.

Afin d'effectuer la mesure de vitesse angulaire lors d'une rotation du gyromètre, un dispositif électrostatique 32 crée des excitations volontaires E1 et E2 respectivement sur les masses m1 et m2 à la fréquence de résonance naturelle des poutres d'excitation et des poutres de rappel. Ces forces d'excitation E1 et E2 de même amplitude et de directions opposées sont appliquées sur les masses m1 et m2 parallèlement à un axe XX' confondu avec l'axe Ox du trièdre de référence. Les excitations E1 et E2 produisent des déplacements des masses m1 et m2 dans deux directions opposées aux respectives vitesses instantanées v1 et v2. Une rotation du gyromètre comportant l'élément sensible 10 soumis aux excitations E1 et E2 produit un couple de forces de Coriolis F1 et F2 autour de l'axe sensible YY', respectivement sur l'une et l'autre masse m1 et m2 provoquant une rotation des éléments transversaux 20, 22 et la torsion des poutres de rappel 24 et 26 autour de ce même axe.

La vitesse angulaire Ω de rotation de l'élément sensible 10 est déterminée par la mesure de la position des masses m1 et m2. Le moment de Coriolis apparaissant sur les masses m1 et m2 est calculé de la façon suivante :

$$\text{Mcor}/_y = \frac{d}{dt}(J . \Omega)$$

Avec

$J \approx J_0 + J_1 \sin \omega t$

$\text{Mcor}/_y$ : moment de Coriolis appliqué sur les masses m1 et m2 ;

$\Omega$ : vitesse angulaire de l'élément sensible 10 autour de l'axe sensible YY' ;

$\omega$ : pulsation naturelle de résonance des masses m1 et m2 ;

$J$ : moment d'inertie des masses m1 et m2 par rapport à l'axe YY' ;

$J_0$ : partie constante du moment d'inertie $J$ ;

$J_1$ : partie oscillante du moment d'inertie généré par le mouvement des masses suivant l'axe XX' à la pulsation naturelle $\omega$.

On mesure la position des masses m1 et m2 par effet capacitif, et connaissant les masses m1 et m2 et les constantes de torsion et de flexion des poutres de l'élément sensible on détermine, d'une façon connue, la vitesse angulaire Ω du gyromètre.

Les forces de Coriolis s'exerçant sur l'élément lors d'une rotation du gyromètre produisent une torsion des poutres de rappel à la fréquence d'oscillation de l'excitation, alors que l'excitation volontaire des masses m1 et m2 produisent une flexion des poutres d'excitation.

La force de flexion et l'amplitude de la flexion qui en résulte sur une poutre sont liés par le module de Young du matériau utilisé, alors que le forces de torsion et l'angle de torsion qui en résulte, pour ce même matériau, sont liés au module de Poisson de comportement mécanique différent selon la géométrie de la poutre soumise à la torsion.

Dans les gyromètres de l'état de l'art, on cherche à réaliser deux systèmes de poutres, poutres d'excitation et poutres de détection, ayant des fréquences de résonances naturelles aussi proches que possible, ceci pour amplifier les deux mouvements, le mouvement vibratoire d'excitation et celui de détection produit par la force de Coriolis sur l'élément sensible 10. Sur les gyromètres de l'état de l'art, la vibration d'excitation se fait sur un mode de flexion, alors que la vibration de détection se fait sur un mode de torsion. Le document DE 195 00 800 A1 décrit un tel gyromètre.

Ces deux modes de résonance ont des comportements différents en terme de variation de fréquence

- en fonction des incertitudes d'usinage des poutres : la raideur d'une poutre à section rectangulaire en flexion dépendant principalement de son épaisseur et de sa longueur, alors que la raideur en torsion est principalement dépendante de la largeur et de l'épaisseur. Les deux types de raideurs sont exprimées par :

Raideur en flexion : Kflexion proportionnelle à $E.W.(H^3/L^3)$
Raideur en torsion : Ktorsion proportionnelle à $[E./2(1-v)].W^3.H^3/[L.(W^2+H^2)]$ avec L, W, et H longueur, largeur et hauteur des poutres, E et v module de Young et coefficient de Poisson du matériau.

- en fonction de la température : le mode de flexion étant lié uniquement au module Young du matériau, alors que la torsion est dépendante du module de Young et du module de Poisson ; ces deux paramètres n'ayant pas le même comportement thermique, et donc n'évoluant pas de la même manière aux fluctuations thermiques appliquées au gyromètre.

Ces inconvénients conduisent à une variation de fréquences de résonance entre les poutres fonctionnant sur des modes différents (flexion et torsion), qui limitent la performance et la stabilité des gyromètres.

Afin de palier les inconvénients des systèmes de mesure de vitesse angulaire de l'art antérieur, l'invention propose un gyromètre comportant un élément sensible micro-usiné ayant au moins deux poutres d'excitation positionnées symétriquement, de part et d'autre et parallèlement à un axe sensible Oy du gyromètre, excitées en flexion selon un axe Ox perpendiculaire à l'axe sensible Oy, et étant réunies par leurs extrémités au moyen d'au moins un élément transversal fixé dans sa partie centrale, au niveau de l'axe sensible Oy, à un bâti par un élément de rappel élastique de torsion s'opposant à la rotation de l'élément transversal autour de l'axe Oy, caractérisé en ce que le ou les éléments de rappel élastiques sont dimensionnés de manière que la variation en température de leur fréquence de résonance naturelle en torsion suive la variation en température de la fréquence de résonance naturelle en flexion des poutres.

Dans une première réalisation du gyromètre selon l'invention, l'élément de rappel élastique d'un élément transversal comporte au moins une poutre allongée dans une direction perpendiculaire à l'axe Oy de manière que la force de rappel de torsion due à cet élément de rappel élastique provienne essentiellement de la résistance à la flexion de cette poutre allongée.

Dans une deuxième réalisation du gyromètre selon l'invention, l'élément de rappel élastique comporte deux poutres allongées sensiblement parallèles attachées l'une à l'autre par leurs extrémités situées d'un même côté, une des poutres étant attachée au niveau de sa partie centrale à l'élément transversal et l'autre poutre étant attachée au niveau de sa partie centrale au bâti.

Dans une autre réalisation du gyromètre selon l'invention, l'élément de rappel élastique comporte trois poutres allongées sensiblement parallèles, une première poutre attachée par une de ses extrémités à l'élément transversal, une deuxième poutre attachée par une de ses extrémités au bâti et une troisième poutre attachée par une de ses extrémités à l'autre extrémité de la première poutre et par son autre extrémité à l'autre extrémité de la deuxième poutre.

Dans ces réalisations selon l'invention, les différents éléments de rappel sont soumis à des forces produisant essentiellement des déformations en flexion et très peu de déformations en torsion, contrairement aux dispositifs micro-mécaniques usinés de l'art antérieur (élément sensible 10 de la figure 1) comportant des poutres d'excitation soumises à des forces les déformant par flexion et des poutres de rappel soumises à des forces les déformant par torsion (couple de rotation au tour de l'axe sensible YY').

Lors des excitations vibratoires des poutres d'excitation de l'élément sensible 10 de la figure 1, les fréquences de résonance des poutres déformées en flexion et des poutres déformées en torsion s'expriment différemment et si l'on veut alors faire vibrer ces poutres à la même fréquence de résonance, les dimensions des poutres d'excitation et de rappel seront très différentes. En effet la poutre de rappel soumise à des efforts de torsion sera de dimension plus courte que la poutre d'excitation soumise à des efforts de flexion.

Les incertitudes géométriques de fabrication affectent très différemment ces deux modes de résonance (en flexion et en torsion) et il est difficile d'obtenir deux fréquences de résonance superposées. D'autre part dans l'élément sensible 10 de la figure 1, la poutre de rappel n'a pas une section ronde mais rectangulaire, le mode de torsion n'est donc pas pur et en conséquence difficile à prévoir précisément. Enfin, les fréquences des modes de torsion et de flexion n'ont pas les mêmes variations en température et cela peut créer des instabilités thermiques de la résonance.

Un autre inconvénient de l'élément sensible 10 de la figure 1 est l'apparition d'un décalage entre les fréquences naturelles de résonance des poutres d'excitation et des poutres de rappel par les dispersions de fabrication. En effet, une même variation géométrique des poutres d'excitation et des poutres de rappel modifie différemment la valeur des respectives fréquences propres de flexion et de torsion.

Dans le dispositif micro-mécanique selon l'invention, usiné à partir d'un même matériau, habituellement du silicium, les poutres allongées sont essentiellement soumises à des efforts de flexion et donc liés aux déformations par le module de Young. Les attaches des poutres allongées d'un élément de rappel seront constituées de poutres de courte longueur dans la direction de l'axe sensible Oy de manière à présenter une forte résistance à la torsion.

D'autres caractéristiques de l'invention apparaîtront à la lecture de la description détaillée des réalisations suivantes et qui est faite en référence aux dessins annexés dans lesquels :

- la figure 1, déjà décrite, montre un dessin simplifié de l'élément sensible 10 d'un gyromètre à diapason de l'art antérieur ;
- la figure 2 montre une première réalisation de l'élément sensible d'un gyromètre à diapason selon l'invention ;
- la figure 3a montre une vue partielle de l'élément sensible du gyromètre de la figure 2.
- la figure 3b montre une vue de dessus selon AA' de la vue partielle de la figure 3a.
- la figure 4 montre une deuxième réalisation de l'élément sensible d'un gyromètre à diapason selon l'invention ;
- la figure 5a montre une vue partielle de l'élément sensible du gyromètre de la figure 4 ;
- la figure 5b montre une vue de dessous selon BB' de la vue partielle de la figure 5a.
- les figures 6 et 7 montrent deux réalisations simplifiées du gyromètre à diapason selon l'invention dont l'élément sensible comporte un seul élément transversal.
- la figure 8 représente une vue partielle d'un élément sensible d'un gyromètre selon l'invention comportant une cascade d'éléments de rappel.
- la figure 9 représente une vue partielle d'un élément sensible, au tour des attaches comportant des petites poutres.

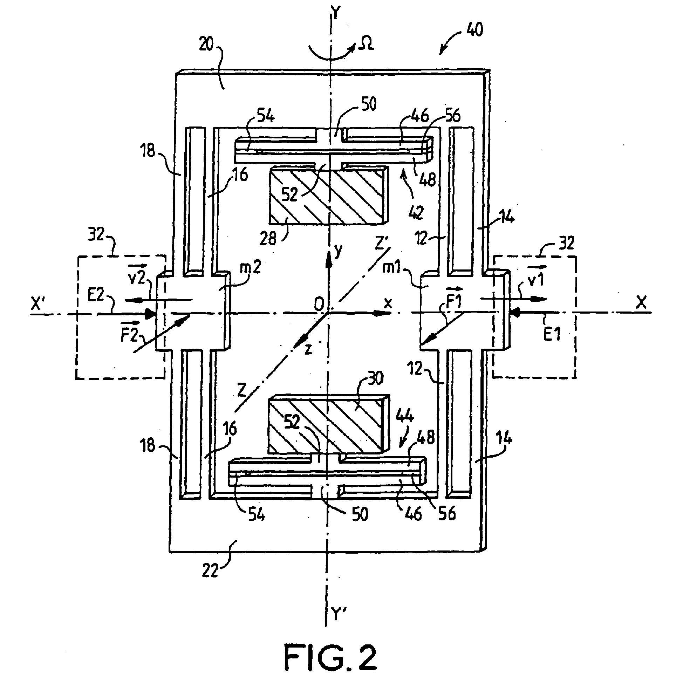

La figure 2 représente une première réalisation d'un l'élément sensible 40 d'un gyromètre à diapason selon l'invention ayant un élément sensible comportant deux éléments transversaux, un premier élément transversal reliant des extrémités des poutres d'excitation situées d'un même coté et un second élément transversal reliant les autres extrémités de ces mêmes poutres d'excitation. L'élément sensible 40 a une structure symétrique en double poutre comme celle de l'élément sensible 10 représenté à la figure 1.

L'élément sensible 40 du gyromètre comporte la première paire de deux poutres d'excitation 12 et 14 et la seconde paire des deux autres poutres d'excitation 16 et 18. Les poutres d'excitation de la première et de la seconde paire sont situées dans le même plan Oxy du trièdre de référence et parallèles à un axe sensible YY' confondu avec l'axe Oy. Ces première et seconde paires sont situés de part et d'autre et sensiblement à égale distance de l'axe YY'.

Chaque paire de poutres d'excitation comporte une masse centrale reliant en leur milieu les deux poutres d'une paire, la masse m1 au milieu de la première paire et la masse m2 au milieu de la seconde paire Les extrémités des poutres 12, 14, 16, 18 situées d'un même côté sont reliées respectivement au premier 20 et au second élément transversal 22 situés dans le même plan Oxy des poutres d'excitation et sensiblement perpendiculaires à ces poutres.

Les premier 20 et second 22 éléments transversaux sont attachés respectivement à un premier 42 et à un second élément de rappel élastique de torsion 44, chacun des éléments de rappel élastique comportant une première 46 et une seconde poutre allongée 48 dans une direction perpendiculaire à l'axe sensible YY', une première poutre allongée 46 étant attachée à un élément transversal et une seconde poutre allongée 48 étant attachée à un bâti, les première et seconde poutres allongées étant attachées l'une à l'autre par ses extrémités d'un même côté.

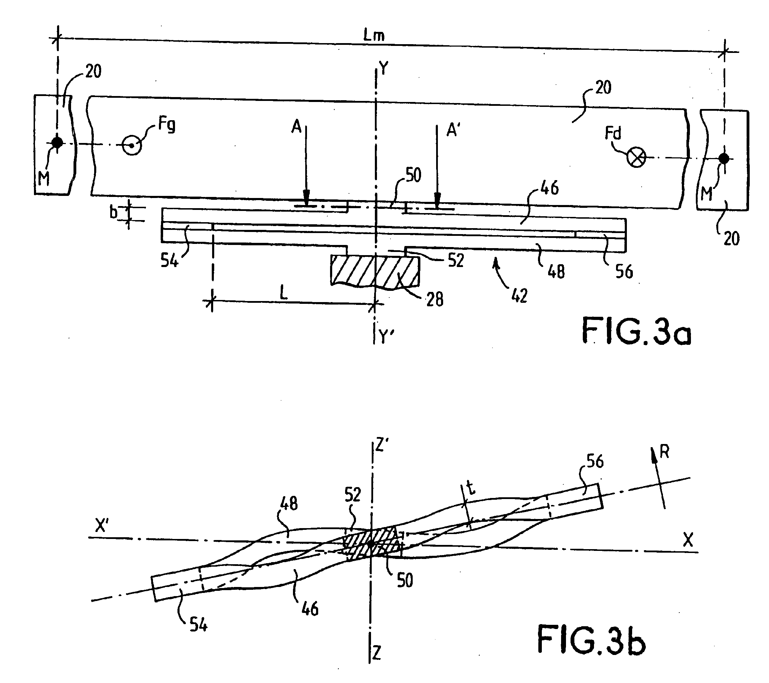

La figure 3a montre une vue partielle agrandie de l'élément sensible 40 du gyromètre selon l'invention, montrant le premier élément de rappel 42.

Le premier élément transversal 20 est attaché à la première poutre allongée 46 du premier élément de rappel élastique 42 par un premier élément rigide 50 situé dans l'axe sensible YY' au niveau d'une partie centrale de cette première poutre allongée 46. La seconde poutre allongée du même élément de rappel 42 est attachée au premier bâti 28 par un deuxième élément rigide 52 situé dans l'axe YY' au niveau d'une partie centrale de la seconde poutre allongée 48. Les deux extrémités situées d'un même coté des deux poutres allongées sont attachées respectivement, par un troisième élément rigide 54 et un quatrième élément rigide 56.

La figure 3b montre une vue de dessus selon AA' de l'élément de rappel 42 de la figure 3a lors d'une rotation R au tour de l'axe YY' de l'élément transversal entraîné par un couple de forces Fg et Fd appliquées sur cet élément.

La rotation de l'élément transversal 20 au tour de l'axe sensible YY' provoque des déformations en S par flexion des première 46 et seconde 48 poutres allongées, la première poutre allongée 46 étant entraînée en rotation par le premier élément rigide 50 solidaire du premier l'élément transversal 20 et la seconde poutre allongée 48 étant entraînée en rotation par les troisième 54 et quatrième 56 éléments rigides solidaires des extrémités des ces deux poutres allongées 46 et 48. Les forces et les déformations par flexion des poutres allongées créées par le mouvement de rotation de l'élément transversal 20 sont liées par le module de Young.

De la même façon (voir figure 2) le second élément transversal 22 est attaché à la première poutre allongée 46 par le premier élément rigide 50 situé dans l'axe sensible YY' au niveau d'une partie centrale de la première poutre allongée 46, la seconde poutre allongée 48 étant attachée au second bâti 30 par le deuxième élément rigide 52 situé dans l'axe sensible YY' au niveau d'une partie centrale de la seconde poutre allongée 48. Les deux extrémités situées d'un même coté des poutres allongées sont attachées respectivement, par le troisième élément rigide 54 et par le quatrième élément rigide 56.

Les éléments de rappel élastique 42 et 44 doivent être dimensionnés correctement afin d'obtenir l'effet recherché, soit une rotation privilégiée suivant un axe donné (axe sensible YY') par rapport aux autres mouvements et provoquant principalement des mouvements de flexion. Pour cela les éléments rigides 50, 52, 54, 56, dont les axes de torsion sont parallèles à l'axe sensible YY,' doivent être très raides et par conséquent très courts selon l'axe YY' et larges suivant les axes perpendiculaires XX' et ZZ'. On peut alors dimensionner les poutres allongées 46 et 48 pour déterminer une raideur de rotation. La longueur de ces poutres allongées dans une direction perpendiculaire à l'axe sensible YY' doit aussi être choisie de manière à privilégier la rotation autour de l'axe YY' par rapport à la flexion selon l'axe ZZ' perpendiculaire aux poutres et à l'axe de rotation YY'.

La raideur de rotation Kt autour de l'axe YY', calculée dans le cas de la première réalisation de l'élément de rappel de la figure 3a et en supposant que les éléments rigides 50, 52, 54, 56 ont une grande rigidité par rapport aux poutres allongées, s'exprime par :

$$Kt1 = 2.E. \; I/L$$

Avec

$I = b.t^3/12$;

E : module de Young ;

L : demi-longueur des poutres 42, 44;

b : dimension des poutres parallèlement à l'axe YY';

t : dimension des poutres parallèlement à l'axe ZZ'.

Pour limiter le mouvement de flexion selon l'axe ZZ', il faut que la fréquence propre de ce mode $f_z$, selon ZZ', soit supérieure à la fréquence propre de torsion $f_t$. La demi-longueur des poutres détermine le rapport entre ces deux fréquences.

Si l'on suppose que des masses ponctuelles M sont placées aux extrémités d'un élément transversal (voir figure 3a) de longueur Lm, que la masse de cet élément transversal est négligeable et que les éléments rigides 50, 52, 54, 56 ont une grande rigidité par rapport aux poutres allongées, la relation entre la longueur de l'élément transversal supportant ces masses, la longueur des poutres de l'élément de rappel et les fréquences propres des modes de torsion et de flexion en ZZ' sont données par :

$$L = (f_t / \; f_z).Lm. \; \sqrt{3}$$

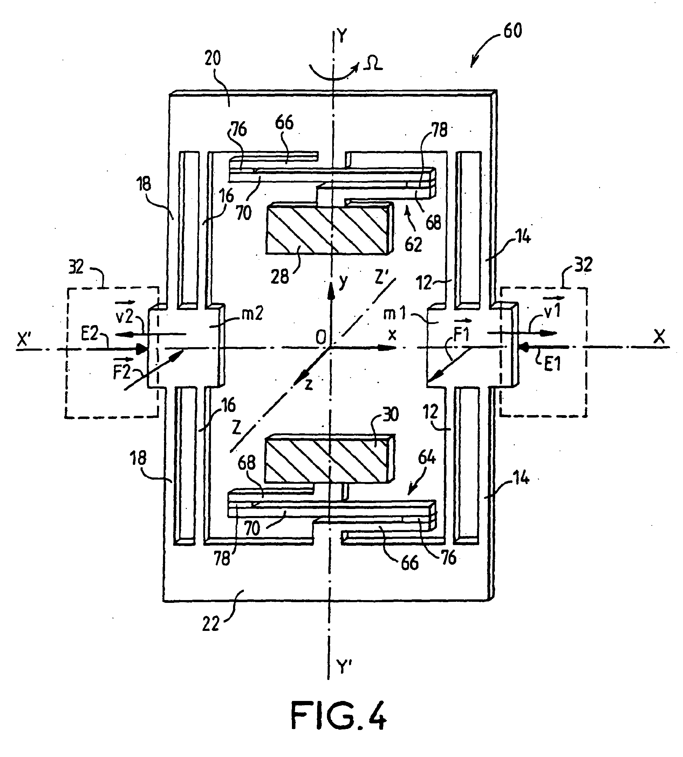

La figure 4 montre une autre réalisation d'un élément sensible 60 d'un gyromètre selon l'invention ayant la même structure symétrique en double poutre des éléments sensibles 10, 40 des figures 1 et 2.

Dans cette autre réalisation, les premier 20 et second 22 éléments transversaux sont attachés respectivement à un premier 62 et à un second élément de rappel élastique 64. Chacun des éléments de rappel comporte trois poutres allongées dans une direction perpendiculaire à l'axe sensible YY', une première poutre allongée 66 étant attachée par une de ses extrémités à un l'élément transversal, une deuxième poutre allongée 68 étant attachée par une de ses extrémités à un bâti et une troisième poutre allongée 70 étant attachée respectivement par l'une et par l'autre de ses deux extrémités à l'autre extrémité de la première 66 et de la deuxième 68 poutre allongée.

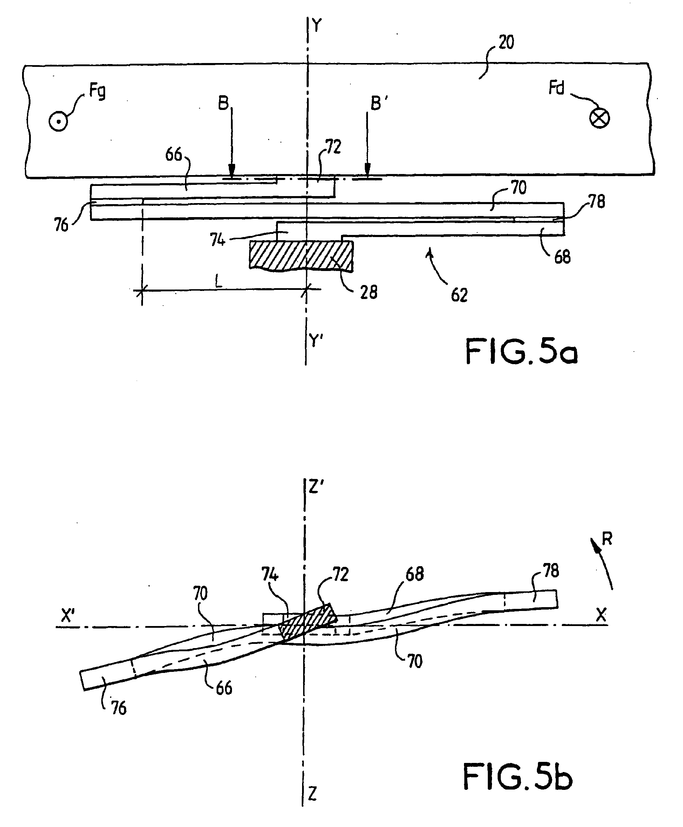

La figure 5a montre une vue partielle agrandie, de l'élément sensible 60 du gyromètre selon l'invention montrant le premier élément de rappel élastique 62.

Le premier élément transversal 20 est attaché à une des extrémités de la première poutre allongée 66 par un premier élément rigide 72 situé dans l'axe sensible YY' de l'élément sensible 60. La deuxième poutre allongée 68 est attachée par une de ses extrémités au premier bâti 28 par un deuxième élément rigide 74 situé dans l'axe sensible YY'. La troisième poutre allongée 70 est attachée par ses deux extrémités, respectivement par l'intermédiaire d'un troisième élément rigide 76 à l'autre extrémité de la première poutre allongée 72 et par l'intermédiaire d'un quatrième élément rigide 78 à l'autre extrémité de la deuxième poutre allongée 68.

La figure 5b montre une vue de dessus selon BB' de l'élément de rappel micro-mécanique usiné 62 de la figure 5a lors d'une rotation R, au tour de l'axe sensible YY,' de l'élément mobile 20 entraîné par le couple de forces Fg et Fd appliquées sur cet élément. La rotation du premier élément transversal 20 au tour de l'axe YY' provoque une déformation en S par flexion des première 66, deuxième 68 et troisième 70 poutres allongées. La première poutre allongée 66 est entraînée en rotation et fléchie par le premier élément rigide 72 solidaire du premier élément transversal 20, le mouvement de cette première poutre allongée produisant à son tour une rotation et une flexion des troisième 70 et deuxième 68 poutres allongées, respectivement par l'intermédiaire du troisième 76 et quatrième 78 éléments rigides.

D'une façon similaire, (voir figure 4) le second élément transversal 22 est attaché à une des extrémités de la première poutre allongée 66 du second élément de rappel élastique 64, par le premier élément rigide 72 situé dans l'axe YY' de l'élément de rappel, la deuxième poutre allongée 68 étant attachée par une de ses extrémités au second bâti 30 par le deuxième élément rigide 72 situé dans l'axe sensible YY'. La troisième poutre allongée 70 est attachée par ses deux extrémités, respectivement par l'intermédiaire du troisième élément rigide 76 à l'autre extrémité de la première poutre allongée 72 et par l'intermédiaire du quatrième élément rigide 78 à l'autre extrémité de la deuxième poutre allongée 68.

Comme dans le cas de la première réalisation de la figure 2, le mouvement de rotation au tour de l'axe sensible YY' des éléments transversaux 20, 22 se traduit par des déformations par flexion des trois poutres allongées de l'élément de rappel dont la raideur sera liée au module de Young.

Dans cette deuxième réalisation de l'élément sensible de la figure 4, la raideur de rotation est donnée par :

$$Kt2 = E.I/3.L$$

Dans les gyromètres selon l'invention, l'élément de rappel effectue une sorte de découplage en transmettant la rotation de l'élément transversal par des poutres rigides parallèles à l'axe sensible YY' à des poutres souples perpendiculaires à cet axe. La rotation provoque ainsi une flexion des poutres perpendiculaires à l'axe sensible alors que les poutres parallèles à l'axe sensible, plus rigides, ne subissent que peu de torsions. Cet élément de rappel permet ainsi de privilégier la rotation par rapport aux autres mouvements.

Dans le cas de systèmes micro-mécanique usinés tel que l'élément sensible de la figure 1, les masses en rotation peuvent être portées par des bras de levier de forte raideur de manière à limiter les mouvements de déflexion des masses par flexion de ces bras. L'élément de rappel lui-même peut être conçu de manière à être plus raide dans les mouvements de translation que pour la rotation souhaitée. Ainsi dans les réalisations décrites aux figures 3a, 3b, 4a et 4b, les poutres allongées sont attachées par des éléments rigides qui ne présentent que très peu de torsion.

La rigidité de ces éléments rigides peut provenir de leurs dimensions. En effet ces éléments rigides sont des poutres plus larges et plus courtes que les poutres allongées.

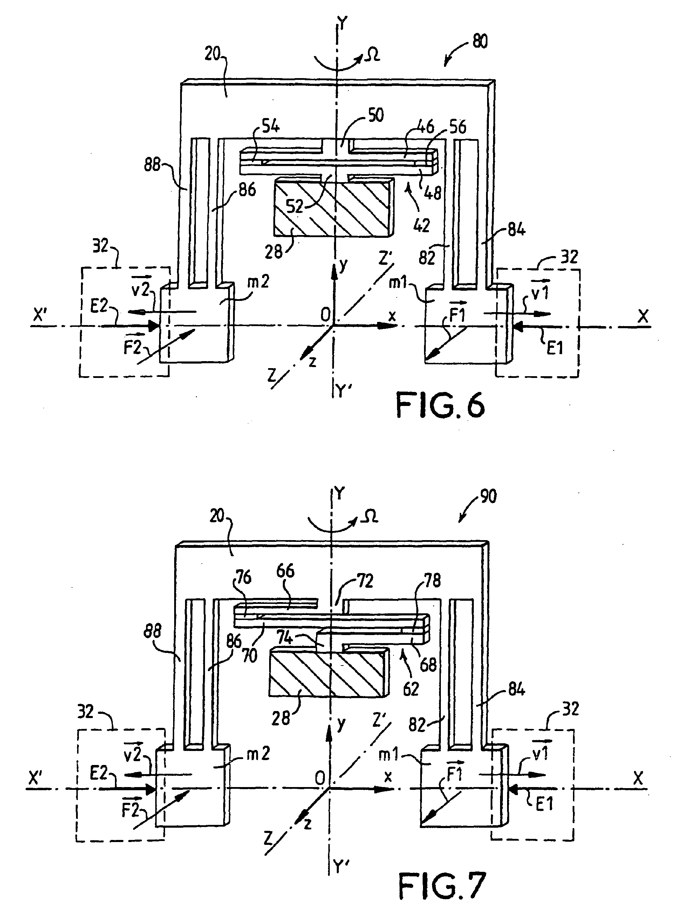

Dans des réalisations simplifiées du gyromètre à diapason selon l'invention, des éléments sensibles 80 et 90 représentés respectivement aux figures 6 et 7, comportent un seul élément transversal.

La structure de l'élément sensible 80 de la figure 6 est la même que celle de la partie supérieure de l'élément sensible 40 de la figure 2 située du seul coté de l'axe XX' comportant le premier élément transversal 20. Une première paire de poutres d'excitation 82 et 84 et une seconde paire de poutres d'excitation 86 et 88 sont fixées à leurs extrémités situées d'un même coté par le seul premier élément transversal, les autres extrémités de la première et de la seconde paire de poutres étant reliées respectivement au masses m1 et m2. L'élément sensible 80 comporte le seul élément de rappel élastique 42 reliant une partie centrale du premier élément transversal 20 au bâti 28.

De la même façon, la structure de l'élément sensible 90 de la figure 7 est la même que celle de la partie supérieure de l'élément sensible 60 de la figure 4 située du seul coté de l'axe XX' comportant le premier élément transversal 20. La première paire de poutres d'excitation 82 et 84 et la seconde paire de poutres d'excitation 86 et 88 sont fixées à leurs extrémités situées d'un même coté par le seul premier élément transversal 20, les autres extrémités de la première et de la seconde paire de poutres étant réliées respectivement au masses m1 et m2. L'élément sensible 90 comporte le seul élément de rappel élastique 62 reliant une partie centrale du premier élément transversal 20 au bâti 28.

Dans d'autres variantes de réalisations du gyromètre à diapason selon l'invention, l'élément sensible comporte deux poutres d'excitation situées de part et d'autre de l'axe sensible YY' reliées à leurs extrémités situées d'un même cote respectivement par les premier 20 et second 22 éléments transversaux.

Les éléments de rappel élastique représentés aux figures 3a et 5a peuvent être cascadés ce qui permet une plus grande amplitude de rotation de l'élément de rappel résultant.

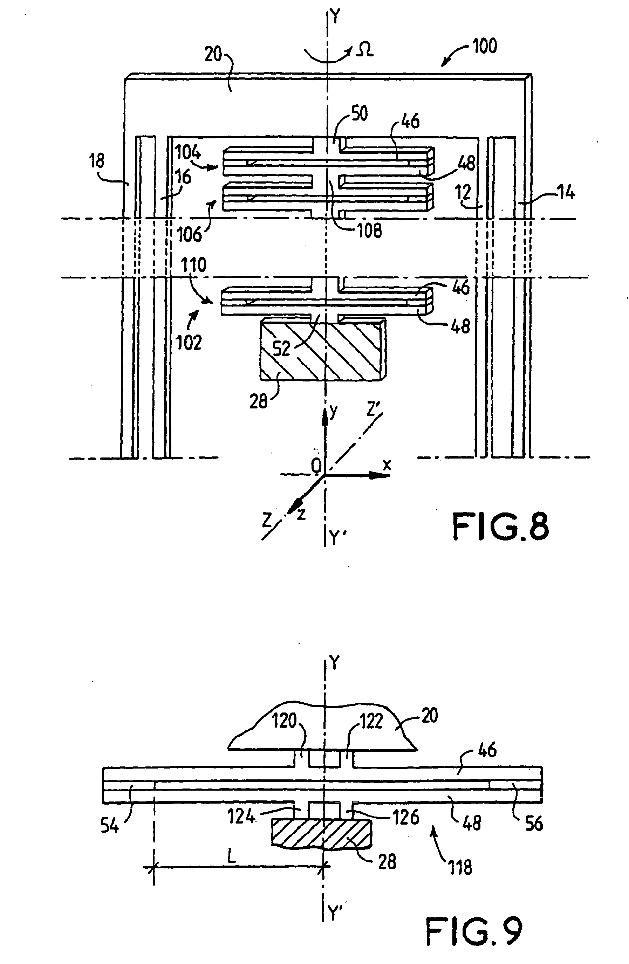

La figure 8 représente une vue partielle d'un élément sensible 100 ayant la même structure en double poutre que celle de l'élément sensible 40 de la figure 2. L'élément sensible 100 comporte une cascade 102 d'éléments de rappel, chacun des éléments de rappel élastique étant tel que représenté à la figure 3a, comportant les deux poutres allongées 46, 48. Le premier élément transversal 20, et le premier bâti 28 sont reliés par une cascade 102 d'éléments de rappel élastique, un premier élément de rappel 104 étant relié au premier l'élément transversal 20 de l'élément sensible 100 par le premier élément rigide 50, un suivant élément de rappel élastique 106 étant relié au premier élément de rappel élastique 104 par un élément rigide intermédiaire 108 et ainsi de suite jusqu'à un dernier élément de rappel élastique110 relié au bâti 28 par le second élément rigide 52.

Dans une autre réalisation du gyromètre, la cascade d'éléments de rappel de l'élément sensible peut être réalisée à partir d'éléments de rappel 72 de la figure 5a comportant trois poutres allongées 66, 68, 70.

Dans d'autres variantes de réalisation de l'élément sensible du gyromètre à diapason, l'élément de rappel élastique (42, 44, 62, 64) est attaché d'une part à l'élément transversal (20, 22) par une première paire de petites poutres 120, 122 et d'autre part au bâti (28,30), par une seconde paire de petites poutres 124, 126 de dimensions très petites, selon l'axe sensible YY' et selon l'axe XX', par rapport à la longueur des poutres allongées, les deux petites poutres d'une paire étant situées de part et d'autre de l'axe sensible YY' et proches de cet axe.

La figure 9 représente une vue partielle d'un élément sensible, autour des attaches d'un premier élément de rappel élastique 118, de même structure que l'élément de rappel élastique 42 représenté à la figure 3a, comportant la première paire de petites poutres 120 et 122 et la seconde paire de petites poutres 124 et 126. Ces petites poutres facilitent encore plus la flexion par rapport à la torsion de l'élément sensible.

Les gyromètres de l'état de l'art permettent d'obtenir des précisions de mesure de la vitesse angulaire de l'ordre de 1 degré par seconde.

L'invention permet de superposer précisément les deux modes de résonance de l'élément sensible d'un gyromètre à diapason lors de sa fabrication, puis en fonctionnement notamment lors des fluctuations thermiques.

Le gyromètre selon l'invention présente donc un meilleur rapport signal à bruit ainsi qu'une meilleure stabilité thermique. Il permet donc des précisions de mesure des vitesses angulaires de l'ordre de dix fois supérieures à celles des gyromètres de l'art antérieur.

## Revendications

1. Gyromètre comportant un élément sensible (10, 40, 60, 80, 90, 100) micro-usiné ayant au moins deux poutres d'excitation (12, 14, 16, 18, 82, 84, 86, 88) positionnées symétriquement, de part et d'autre et parallèlement à un axe sensible Oy du gyromètre, excitées en flexion selon un axe Ox perpendiculaire à l'axe sensible Oy, et étant réunies par leurs extrémités au moyen d'au moins un élément transversal (20, 22) fixé dans sa partie centrale, au niveau de l'axe sensible Oy, à un bâti (28, 30), par un élément de rappel élastique de torsion (24, 26, 42, 44, 62, 64, 110) s'opposant à la rotation de l'élément transversal autour de l'axe Oy, **caractérisé en ce que** le ou les éléments de rappel élastiques sont dimensionnés de manière que la variation en température de leur fréquence de résonance naturelle en torsion suive la variation en température de la fréquence de résonance naturelle en flexion des poutres.

2. Gyromètre selon la revendication 1 **caractérisé en ce que** l'élément de rappel élastique d'un élément transversal comporte au moins une poutre allongée (46, 48, 66, 68, 70) dans une direction perpendiculaire à l'axe Oy de manière que la force de rappel de torsion due à cet élément de rappel élastique provienne essentiellement de la résistance à la flexion de cette poutre allongée.

3. Gyromètre selon la revendication 2, **caractérisé en ce que** l'élément de rappel élastique comporte deux poutres allongées (46, 48) sensiblement parallèles attachées l'une à l'autre par leurs extrémités situées d'un même côté, une des poutres étant attachée au niveau de sa partie centrale à l'élément transversal (20, 22) et l'autre poutre étant attachée au niveau de sa partie centrale au bâti (28, 30).

4. Gyromètre selon la revendication 2, **caractérisé en ce que** l'élément de rappel élastique (62, 64) comporte trois poutres allongées (66, 68, 70) sensiblement parallèles, une première poutre (66) attachée par une de ses extrémités à l'élément transversal, une deuxième poutre (68) attachée par une de ses extrémités au bâti et une troisième poutre (70) attachée par une de ses extrémités à l'autre extrémité de la première poutre et par son autre extrémité à l'autre extrémité de la deuxième poutre.

5. Gyromètre selon la revendication 2, **caractérisé en ce que** l'élément sensible (40) du gyromètre comporte une première paire de deux poutres d'excitation (12, 14) et une seconde paire de deux autres poutres d'excitation (16, 18), les poutres d'excitation de la première et de la seconde paire étant situées dans le même plan Oxy d'un trièdre de référence et parallèles à un axe sensible YY' confondu avec l'axe Oy, ces première et seconde paires étant situées de part et d'autre et sensiblement à égale distance de l'axe YY', chaque paire de poutres d'excitation comportant une masse centrale reliant en leur milieu les deux poutres d'une paire, une masse m1 au milieu de la première paire et une masse m2 au milieu de la seconde paire, les extrémités des poutres d'excitation (12, 14, 16, 18) situées d'un même côté étant reliées respectivement au premier élément transversal (20) et au second élément transversal (22) situés dans le même plan Oxy des poutres d'excitation et sensiblement perpendiculaires à ces poutres, le premier élément transversal (20) et le second élément transversal (22) étant attachés respectivement à un premier élément de rappel élastique de torsion (42, 62) et à un second élément de rappel élastique de torsion (44, 64).

6. Gyromètre selon la revendication 5, **caractérisé en ce que** chacun des éléments de rappel élastique (42, 44) comportent une première poutre allongée (46) et une seconde poutre allongée (48) dans une direction perpendiculaire à l'axe sensible YY', la première poutre allongée (46) étant attachée à un élément transversal (20, 22) et la seconde poutre allongée (48) étant attachée à un bâti (28, 30), la première poutre allongée et la seconde poutre allongée étant attachées l'une à l'autre par ses extrémités d'un même côté.

7. Gyromètre selon la revendication 6, **caractérisé en ce que** le premier élément transversal (20) est attaché à la première poutre allongée (46) du premier élément de rappel élastique (42) par un premier élément rigide (50) situé dans l'axe sensible YY' au niveau d'une partie centrale de cette première poutre allongée (46), la seconde poutre allongée du même élément de rappel élastique (48) étant attachée à un premier bâti (28) par un deuxième élément rigide (52) situé dans l'axe YY' au niveau d'une partie centrale de la seconde poutre allongée (48), les deux extrémités situées d'un même coté des deux poutres allongées étant attachées respectivement, par un troisième élément rigide (54) et un quatrième élément rigide (56) et **en ce que** le second l'élément transversal (22) est attaché à la première poutre allongée (46) par le premier élément rigide (50) situé dans l'axe sensible YY' au niveau d'une partie centrale de la première poutre allongée (46), la seconde poutre allongée (48) étant attachée à un second bâti (30) par le deuxième élément rigide (52) situé dans l'axe sensible YY' au niveau d'une partie centrale de la seconde poutre allongée (48), les deux extrémités situées d'un même coté des poutres allongées étant attachées respectivement, par le troisième élément rigide (54) et par le quatrième élément rigide (56).

8. Gyromètre selon la revendication 5, **caractérisé en ce que** chacun des éléments de rappel élastique (62, 64) comporte trois poutres allongées (66, 68, 70) dans une direction perpendiculaire à l'axe sensible YY,' une première poutre allongée (66) étant attachée par une de ses extrémités à un l'élément transversal (20, 22), une deuxième poutre allongée (68) étant attachée par une de ses extrémités à un bâti (28, 30) et une troisième poutre allongée (70) étant attachée respectivement par l'une et par l'autre de ses deux extrémités à l'autre extrémité de la première (66) et de la deuxième (68) poutre allongée.

9. Gyromètre selon la revendication 8, **caractérisé en ce que** le premier élément transversal (20) est attaché à une première extrémité de la première poutre allongée (66) du premier élément de rappel élastique (62) par un premier élément rigide (72) situé dans l'axe sensible YY' de l'élément sensible (60), la seconde poutre allongée (68) étant attachée par une de ses extrémités au premier bâti (28) par un deuxième élément rigide (74) situé dans l'axe sensible YY', la troisième poutre allongée (70) étant attachée par ses deux extrémités, respectivement par l'intermédiaire d'un troisième élément rigide (76), à l'autre extrémité de la première poutre allongée (66), et par l'intermédiaire d'un quatrième élément rigide (78) à l'autre extrémité de la deuxième poutre allongée (68), et **en ce que** le second élément transversal (22) est attaché à une des extrémités de la première poutre allongée (66) du second élément de rappel élastique (64), par le premier élément rigide (72) situé dans l'axe sensible YY', la deuxième poutre allongée (68) étant attachée par une de ses extrémités au second bâti (30) par le deuxième élément rigide (74) situé dans l'axe sensible YY', la troisième poutre allongée (70) étant attachée par ses deux extrémités, respectivement par l'intermédiaire du troisième élément rigide (76) à l'autre extrémité de la première poutre allongée (66) et par l'intermédiaire du quatrième élément rigide (78) à l'autre extrémité de la deuxième poutre allongée (68).

10. Gyromètre selon l'une des revendications 3 à 9, **caractérisé en ce que** les attaches sont constituées par des poutres de courte longueur dans la direction de l'axe sensible Oy de manière à présenter une forte résistance à la torsion.

11. Gyromètre selon l'une des revendications 7 à 9, **caractérisé en ce que** les éléments rigides (50, 52, 54, 56, 72, 74, 76, 78) sont des poutres plus larges et plus courtes que les poutres allongées.

12. Gyromètre selon l'une des revendications 2 à 4, **caractérisé en ce que** l'élément sensible (80, 90) comporte une première paire de poutres d'excitation (82, 84) et une seconde paire de poutres d'excitation (86, 88), ces poutres d'excitation étant fixées à leurs extrémités situées d'un même coté sur un seul premier élément transversal (20), les autres extrémités de la première et de la seconde paire de poutres étant reliées respectivement aux masses m1 et m2, l'élément sensible (80, 90) comportant le seul élément de rappel élastique (42, 62, 102) reliant une partie centrale du premier élément transversal (20) à un premier bâti (28).

13. Gyromètre selon l'une des revendications 2 à 4, **caractérisé en ce que** l'élément transversal (20, 22) et le bâti (28, 30) sont reliés par une cascade (102) d'éléments de rappel élastiques (42, 62), un premier élément de rappel élastique (104) étant relié au premier l'élément transversal (20) de l'élément sensible (100) par un premier élément rigide (50), un suivant élément de rappel élastique (106) étant relié au premier élément de rappel élastique (104) par un élément rigide intermédiaire (108) et ainsi de suite jusqu'à un dernier élément de rappel élastique (110) relié au bâti (28, 30) par un second élément rigide (52).

14. Gyromètre selon l'une des revendications 2 à 5, **caractérisé en ce que** l'élément de rappel élastique (42, 44, 62, 64) est attaché d'une part à l'élément transversal (20, 22) par une première paire de petites poutres (120, 122) et d'autre part au bâti (28, 30), par une seconde paire de petites poutres (124, 126) de dimensions très petites, selon l'axe sensible YY' et selon l'axe XX', par rapport à la longueur des poutres allongées, les deux petites poutres d'une paire étant situées de part et d'autre de l'axe sensible YY' et proches de cet axe.

## Claims

1. Gyrometer comprising a micromachined sensitive element (10, 40, 60, 80, 90, 100) having at least two symmetrically positioned excitation beams (12, 14, 16, 18, 82, 84, 86, 88), on either side of and parallel to a sensitive axis Oy of the gyrometer, excited in bending along an axis Ox perpendicular to the sensitive axis Oy and being joined by their ends by means of at least one transverse element (20, 22) fixed in its central part, level with the sensitive axis Oy, to a frame (28, 30) by a torsional elastic return element (24, 26, 42, 44, 62, 64, 110) acting counter to the rotation of the transverse element about the axis Oy, **characterized in that** the elastic return element(s) is/are dimensioned such that the variation in temperature of its/their natural torsional resonance frequency tracks the variation in temperature of the natural flexural resonance frequency of the beams.

2. Gyrometer according to Claim 1, **characterized in that** the elastic return element of a transverse element comprises at least one elongated beam (46, 48, 66, 68, 70) extending in a direction perpendicular to the axis Oy such that the torsional return force due to this elastic return element derives essentially from the bending resistance of this elongated beam.

3. Gyrometer according to Claim 2, **characterized in that** the elastic return element comprises two substantially parallel elongated beams (46, 48) attached to each other by their ends situated on a same side, one of the beams being attached at its central part to the transverse element (20, 22) and the other beam being attached at its central part to the frame (28, 30).

4. Gyrometer according to Claim 2, **characterized in that** the elastic return element (62, 64) comprises three substantially parallel elongated beams (66, 68, 70), a first beam (66) attached by one of its ends to the transverse element, a second beam (68) attached by one of its ends to the frame, and a third beam (70) attached by one of its ends to the other end of the first beam and by its other end to the other end of the second beam.

5. Gyrometer according to Claim 2, **characterized in that** the sensitive element (40) of the gyrometer comprises a first pair of two excitation beams (12, 14) and a second pair of two other excitation beams (16, 18), the excitation beams of the first and of the second pair being situated in the same plane Oxy of a reference coordinate system and parallel to a sensitive axis YY' coincident with the axis Oy, these first and second pairs being situated on either side of and substantially equidistant from the axis YY', each pair of excitation beams comprising a central mass connecting the two beams of a pair in their middle, a mass m1 in the middle of the first pair, and a mass m2 in the middle of the second pair, the ends of the excitation beams (12, 14, 16, 18) situated on a same side being connected to the first transverse element (20) and to the second transverse element (22), respectively, situated in the same plane Oxy of the excitation beams and substantially perpendicular to these beams, the first transverse element (20) and the second transverse element (22) being attached to a first torsional elastic return element (42, 62) and to a second torsional elastic return element (44, 64), respectively.

6. Gyrometer according to Claim 5, **characterized in that** each of the elastic return elements (42, 44) comprises a first elongated beam (46) and a second elongated beam (48) extending in a direction perpendicular to the sensitive axis YY', the first elongated beam (46) being attached to a transverse element (20, 22) and the second elongated beam (48) being attached to a frame (28, 30), the first elongated beam and the second elongated beam being attached to each other by their ends on a same side.

7. Gyrometer according to Claim 6, **characterized in that** the first transverse element (20) is attached to the first elongated beam (46) of the first elastic return element (42) by a first rigid element (50) situated in the sensitive axis YY' level with a central part of this first elongated beam (46), the second elongated beam of the same elastic return element (48) being attached to a first frame (28) by a second rigid element (52) situated in the axis YY' level with a central part of the second elongated beam (48), the two ends situated on a same side of the two elongated beams being attached by a third rigid element (54) and a fourth rigid element (56), respectively, and **in that** the second transverse element (22) is attached to the first elongated beam (46) by the first rigid element (50) situated in the sensitive axis YY' level with a central part of the first elongated beam (46), the second elongated beam (48) being attached to a second frame (30) by the second rigid element (52) situated in the sensitive axis YY' level with a central part of the second elongated beam (48), the two ends situated on a same side of the elongated beams being attached by the third rigid element (54) and by the fourth rigid element (56), respectively.

8. Gyrometer according to Claim 5, **characterized in that** each of the elastic return elements (62, 64) comprises three elongated beams (66, 68, 70) extending in a direction perpendicular to the sensitive axis YY', a first elongated beam (66) being attached by one of its ends to a transverse element (20, 22), a second elongated beam (68) being attached by one of its ends to a frame (28, 30) and a third elongated beam (70) being attached by one and by the other of its two ends to the other end of the first (66) and of the second elongated beam (68), respectively.

9. Gyrometer according to Claim 8, **characterized in that** the first transverse element (20) is attached to a first end of the first elongated beam (66) of the first elastic return element (62) by a first rigid element (72) situated in the sensitive axis YY' of the sensitive element (60), the second elongated beam (68) being attached by one of its ends to the first frame (28) by a second rigid element (74) situated in the sensitive axis YY', the third elongated beam (70) being attached by its two ends via a third rigid element (76) to the other end of the first elongated beam (66) and via a fourth rigid element (78) to the other end of the second elongated beam (68), respectively, and **in that** the second transverse element (22) is attached to one of the ends of the first elongated beam (66) of the second elastic return element (64) by the first rigid element (72) situated in the sensitive axis YY', the second elongated beam (68) being attached by one of its ends to the second frame (30) by the second rigid element (74) situated in the sensitive axis YY', the third elongated beam (70) being attached by its two ends via the third rigid element (76) to the other end of the first elongated beam (66) and via the fourth rigid element (78) to the other end of the second elongated beam (68), respectively.

10. Gyrometer according to one of Claims 3 to 9, **characterized in that** the fastenings are constituted by beams of short length in the direction of the sensitive axis Oy so as to exhibit strong torsional resistance.

11. Gyrometer according to one of Claims 7 to 9, **characterized in that** the rigid elements (50, 52, 54, 56, 72, 74, 76, 78) are beams of greater width and shorter length than the elongated beams.

12. Gyrometer according to one of Claims 2 to 4, **characterized in that** the sensitive element (80, 90) comprises a first pair of excitation beams (82, 84) and a second pair of excitation beams (86, 88), these excitation beams being fixed at their ends situated on a same side onto a single first transverse element (20), the other ends of the first and of the second pair of beams being connected to the masses m1 and m2, respectively, the sensitive element (80, 90) comprising the single elastic return element (42, 62, 102) connecting a central part of the first transverse element (20) to a first frame (28).

13. Gyrometer according to one of Claims 2 to 4, **characterized in that** the transverse element (20, 22) and the frame (28, 30) are connected by a cascade (102) of elastic return elements (42, 62), a first elastic return element (104) being connected to the first transverse element (20) of the sensitive element (100) by a first rigid element (50), a next elastic return element (106) being connected to the first elastic return element (104) by an intermediate rigid element (108), and so on up to a last elastic return element (110) connected to the frame (28, 30) by a second rigid element (52).

14. Gyrometer according to one of Claims 2 to 5, **characterized in that** the elastic return element (42, 44, 62, 64) is attached, on the one hand, to the transverse element (20, 22) by a first pair of small beams (120, 122) and, on the other hand, to the frame (28, 30), by a second pair of small beams (124, 126) of very small dimensions, along the sensitive axis YY' and along the axis XX', relative to the length of the elongated beams, the two small beams of a pair being situated on either side of the sensitive axis YY' and close to this axis.

**Patentansprüche**

1. Gyrometer, umfassend ein durch Mikrobearbeitung hergestelltes sensibles Element (10, 40, 60, 80, 90, 100), das mindestens zwei Erregersäulen (12, 14, 16, 18, 82, 84, 86, 88) aufweist, die symmetrisch beiderseits und parallel zu einer sensiblen Achse Oy des Gyrometers angeordnet sind und entlang einer Achse Ox senkrecht auf die sensible Achse Oy in Biegung erregt werden und mit ihren Enden mit Hilfe mindestens eines Querelements (20, 22) verbunden sind, das in seinem zentralen Teil im Bereich der sensiblen Achse Oy an einem Gehäuse (28, 30) durch ein elastisches Torsionsrückstellelement (24, 26, 42, 44, 62, 64, 110) befestigt ist, das sich der Drehung des Querelements um die Achse Oy widersetzt, **dadurch gekennzeichnet, dass** das oder die elastischen Rückstellelemente derart dimensioniert sind, dass die Temperaturvariation ihrer natürlichen Resonanzfrequenz bei Torsion der Temperaturvariation der natürlichen Resonanzfrequenz bei Biegung der Säulen folgt.

2. Gyrometer nach Anspruch 1, **dadurch gekennzeichnet, dass** das elastische Rückstellelement eines Querelements mindestens eine längliche Säule (46, 48, 66, 68, 70) in eine Richtung senkrecht auf die Achse Oy umfasst, so dass die Torsionsrückstellkraft durch dieses elastische Rückstellelement im Wesentlichen vom Biegewiderstand dieser länglichen Säule stammt.

3. Gyrometer nach Anspruch 2, **dadurch gekennzeichnet, dass** das elastische Rückstellelement zwei im Wesentlichen parallele längliche Säulen (46, 48) umfasst, die aneinander mit ihren auf derselben Seite befindlichen Enden befestigt sind, wobei eine der Säulen im Bereich ihres zentralen Teils mit dem Querelement (20, 22) und die andere Säule im Bereich ihres zentralen Teils mit dem Gehäuse (28, 30) verbunden ist.

4. Gyrometer nach Anspruch 2, **dadurch gekennzeichnet, dass** das elastische Rückstellelement (62, 64) drei im Wesentlichen parallele längliche Säulen (66, 68, 70) umfasst, eine erste Säule (66), die mit einem ihrer Enden am Querelement befestigt ist, eine zweite Säule (68), die mit einem ihrer Enden am Gehäuse befestigt ist, und eine dritte Säule (70), die mit einem ihrer Enden am anderen Ende der ersten Säule und mit ihrem anderen Ende mit dem anderen Ende der zweiten Säule verbunden ist.

5. Gyrometer nach Anspruch 2, **dadurch gekennzeichnet, dass** das sensible Element (40) des Gyrometers ein erstes Paar von zwei Erregersäulen (12, 14) und ein zweites Paar von zwei weiteren Erregersäulen (16, 18) umfasst, wobei sich die Erregersäulen des ersten und des zweiten Paars in derselben Ebene Oxy eines Referenzkoordinatensystems befinden und parallel zu einer mit der Achse Oy zusammenfallenden sensiblen Achse YY' liegen, wobei dieses erste und zweite Paar beiderseits und im Wesentlichen in gleichem Abstand zur Achse YY' angeordnet sind, wobei jedes Paar von Erregersäulen eine zentrale Masse umfasst, die in ihrer Mitte die beiden Säulen eines Paars verbindet, eine Masse m1 in der Mitte des ersten Paars und eine Masse m2 in der Mitte des zweiten Paars, wobei die Enden der Erregersäulen (12, 14, 16, 18), die sich auf einer selben Seite befinden, mit dem ersten Querelement (20) bzw. dem zweiten Querelement (22) verbunden sind, die sich in derselben Ebene Oxy der Erregersäulen und im Wesentlichen senkrecht zu diesen Säulen befinden, wobei das erste Querelement (20) und das zweite Querelement (22) mit einem ersten elastischen Torsionsrückstellelement (42, 62) bzw. einem zweiten elastischen Torsionsrückstellelement (44, 64) verbunden sind.

6. Gyrometer nach Anspruch 5, **dadurch gekennzeichnet, dass** jedes der elastischen Rückstellelemente (42, 44) eine erste längliche Säule (46) und eine zweite längliche Säule (48) in eine Richtung senkrecht auf die sensible Achse YY' umfassen, wobei die erste längliche Säule (46) mit einem Querelement (20, 22) und die zweite längliche Säule (48) mit einem Gehäuse (28, 30) verbunden ist, wobei die erste längliche Säule und die zweite längliche Säule aneinander durch ihre Enden einer selben Seite befestigt sind.

7. Gyrometer nach Anspruch 6, **dadurch gekennzeichnet, dass** das erste Querelement (20) an der ersten länglichen Säule (46) des ersten elastischen Rückstellelements (42) durch ein erstes starres Element (50) befestigt ist, das sich in der sensiblen Achse YY' im Bereich eines zentralen Teils dieser ersten länglichen Säule (46) befindet, wobei die zweite längliche Säule desselben elastischen Rückstellelements (48) an einem ersten Gehäuse (28) durch ein zweites starres Element (52) befestigt ist, das sich in der Achse YY' im Bereich eines zentralen Teils der zweiten länglichen Säule (48) befindet, wobei die beiden Enden, die sich auf einer selben Seite der beiden länglichen Säulen befinden, durch ein drittes starres Element (54) bzw. ein viertes starres Element (56) befestigt sind, und dass das zweite Querelement (22) an der ersten länglichen Säule (46) durch das erste starre Element (50) befestigt ist, dass sich in der sensiblen Achse YY' im Bereich eines zentralen Teils der ersten länglichen Säule (46) befindet, wobei die zweite längliche Säule (48) an einem zweiten Gehäuse (30) durch das zweite starre Element (52) befestigt ist, das in der sensiblen Achse YY' im Bereich eines zentralen Teils der zweiten länglichen Säule (48) angeordnet ist, wobei die beiden Enden, die sich auf einer selben Seite der länglichen Säulen befinden, durch das dritte starre Element (54) bzw. das vierte starre Element (56) befestigt sind.

8. Gyrometer nach Anspruch 5, **dadurch gekennzeichnet, dass** jedes der elastischen Rückstellelemente (62, 64) drei längliche Säulen (66, 68, 70) in eine Richtung senkrecht auf die sensible Achse YY' umfasst, wobei eine erste längliche Säule (66) mit einem ihrer Enden an einem Querelement (20, 22) befestigt ist, wobei eine zweite längliche Säule (68) mit einem ihrer Enden an einem Gehäuse (28, 30) befestigt ist, und wobei eine dritte längliche Säule (70) mit dem einen bzw. dem anderen ihrer beiden Enden am anderen Ende der ersten (66) und der zweiten (68) länglichen Säule befestigt ist.

9. Gyrometer nach Anspruch 8, **dadurch gekennzeichnet, dass** das erste Querelement (20) an einem ersten Ende der ersten länglichen Säule (66) des ersten elastischen Rückstellelements (62) durch ein erstes starres Element (72), das sich in der sensiblen Achse YY' des sensiblen Elements (60) befindet, befestigt ist, wobei die zweite längliche Säule (68) mit einem ihrer Enden am ersten Gehäuse (28) durch ein zweites starres Element (74), das sich in der sensiblen Achse YY' befindet, befestigt ist, wobei die dritte längliche Säule (70) mit ihren beiden Enden über ein drittes starres Element (76) am anderen Ende der ersten länglichen Säule (66) bzw. über ein viertes starres Element (78) am anderen Ende der zweiten länglichen Säule (68) befestigt ist, und dass das zweite Querelement (22) an einem der Enden der ersten länglichen Säule (66) des zweiten elastischen Rückstellelements (64) durch das erste starre Element (72), das sich in der sensiblen Achse YY' befindet, befestigt ist, wobei die zweite längliche Säule (68) mit einem ihrer Enden am zweiten Gehäuse (30) durch das zweite starre Element (74), das sich in der sensiblen Achse YY' befindet, befestigt ist, wobei die dritte längliche Säule (70) mit ihren beiden Enden über das dritte starre Element (76) mit dem anderen Ende der ersten länglichen Säule (66) bzw. über das vierte starre Element (78) am anderen Ende der zweiten länglichen Säule (68) befestigt ist.

10. Gyrometer nach einem der Ansprüche 3 bis 9, **dadurch gekennzeichnet, dass** die Befestigungen von Säulen von kurzer Länge in Richtung der sensiblen Achse Oy gebildet sind, um eine starke Torsionsfestigkeit aufzuweisen.

11. Gyrometer nach einem der Ansprüche 7 bis 9, **dadurch gekennzeichnet, dass** die starren Elemente (50, 52, 54, 56, 72, 74, 76, 78) breitere und kürzere Säulen als die länglichen Säulen sind.

12. Gyrometer nach einem der Ansprüche 2 bis 4, **dadurch gekennzeichnet, dass** das sensible Element (80, 90) ein erstes Paar von Erregersäulen (82, 84) und ein zweites Paar von Erregersäulen (86, 88) umfasst, wobei diese Erregersäulen an ihren Enden, die sich auf einer selben Seiten befinden, an einem einzelnen ersten Querelement (20) befestigt sind, wobei die anderen Enden des ersten und zweiten Paars von Säulen mit den Massen m1 bzw. m2 verbunden sind, wobei das sensible Element (80, 90) das einzelne elastisches Rückstellelement (42, 62, 102) umfasst, das einen zentralen Teil des ersten Querelements (20) mit einem ersten Gehäuse (28) verbindet.

13. Gyrometer nach einem der Ansprüche 2 bis 4, **dadurch gekennzeichnet, dass** das Querelement (20, 22) und das Gehäuse (28, 30) durch eine Kaskade (102) von elastischen Rückstellelementen (42, 62) verbunden sind, wobei ein erstes elastisches Rückstellelement (104) mit dem ersten Querelement (20) des sensiblen Elements (100) durch ein erstes starres Element (50) verbunden ist, ein folgendes elastisches Rückstellelement (106) mit dem ersten elastischen Rückstellelement (104) durch ein starres Zwischenelement (108) verbunden ist, und so weiter bis zu einem letzten elastischen Rückstellelement (110), das mit dem Gehäuse (28, 30) durch ein zweites starres Element (52) verbunden ist.

14. Gyrometer nach einem der Ansprüche 2 bis 5, **dadurch gekennzeichnet, dass** das elastische Rückstellelement (42, 44, 62, 64) einerseits am Querelement (20, 22) durch ein erstes Paar von kleinen Säulen (120, 122) und andererseits am Gehäuse (28, 30) durch ein zweites Paar von kleinen Säulen (124, 126) mit sehr kleinen Dimensionen entlang der sensiblen Achse YY' und entlang der Achse XX' in Bezug auf die Länge der länglichen Säulen befestigt ist, wobei die beiden kleinen Säulen eines Paars beiderseits der sensiblen Achse YY' und nahe dieser Achse angeordnet sind.

FIG.1

FIG.2

FIG.3a

FIG.3b

FIG.4

FIG.5a

FIG.5b

FIG.6

FIG.7

FIG.8

FIG.9